# FASCICULE DE BREVET EUROPEEN

(11) **EP 0 852 696 B1**
(45) Date de publication et mention de la délivrance du brevet: **28.11.2001**
(21) Numéro de dépôt: 96932651.1
(22) Date de dépôt: 25.09.1996
(51) Int. Cl.: G01B 11/24, G01B 5/20

(54) **DISPOSITIF ET PROCEDE DE CONTROLE DE LA GEOMETRIE D'UN TROU CREUSE DANS UNE PIECE**
VERFAHREN UND VORRICHTUNG ZUR KONTROLLE DER GEOMETRIE EINES LOCHES IN EINEM WERKSTÜCK
DEVICE AND METHOD FOR CHECKING THE GEOMETRY OF A HOLE BORED IN A PART

(30) Priorité: 26.09.1995 FR 9511271
(43) Date de publication de la demande: 15.07.1998
(73) Titulaire: DASSAULT-AVIATION, F-75008 Paris (FR)
(72) Inventeur: GUERIN, Sylvain, F-59113 Seclin (FR)
(74) Mandataire: Colas, Jean-Pierre
(86) Numéro de dépôt international: FR9601498
(87) Numéro de publication internationale: WO9712201

(56) Documents cités:
- EP-A- 0 373 644
- US-A- 4 753 555
- PATENT ABSTRACTS OF JAPAN vol. 10, no. 127 (P-455) [2184] , 13 Mai 1986 & JP,A,60 252206 (HITACHI SEISAKUSHO K.K.), 12 Décembre 1985,

## Description

La présente invention est relative à un dispositif et à un procédé de contrôle de la géométrie d'un trou.

La présente invention trouve son origine dans la mise au point d'appareillages destinés au rivetage automatique de pièces, par exemple de tôles. On a décrit, voir par exemple le document EP-A-402.222, au nom de la Demanderesse, des dispositifs qui comportent un ensemble, monté sur deux bras de robot disposés de chaque côté de deux pièces à relier par rivetage, ces ensembles comportant des moyens pour maintenir les deux tôles dans une position convenable pendant qu'on fore un trou dans ces pièces, qu'on y introduit un rivet, et qu'on met en forme ce rivet pour assurer la liaison des tôles, toutes ces opérations se faisant sans intervention manuelle directe.

Une grande constance est nécessaire dans les caractéristiques géométriques du trou et du rivet avant formage, pour obtenir un état de surface satisfaisant des pièces liées par rivetage. En particulier, dans le cas où on prévoit que le rivet, une fois formé, doit venir en affleurement sur la surface d'une pièce, ce qui impose un chanfreinage du trou, on conçoit que des variations relativement faibles du volume du trou puissent conduire à ce que le rivet paraisse en saillie ou en creux sur la surface de la pièce. Par ailleurs, l'amélioration des techniques exige qu'on connaisse avec précision l'énergie nécessaire pour le formage du rivet, et cette énergie est fonction des dimensions du trou.

Jusqu'ici, le seul moyen d'éviter de tels inconvénients consiste à opérer régulièrement des contrôles manuels et visuels, de façon à s'assurer que l'outillage crée à chaque fois des trous qui restent dans les limites des tolérances acceptées. De tels contrôles sont, notamment en ce qui concerne le chanfreinage, exécutés manuellement par introduction de calibres dans le trou. Il s'agit d'une opération méticuleuse, dépendant de la dextérité de l'opérateur.

On connaît de US-A-4 753 555 un dispositif pour percer puis inspecter un trou. Plusieurs palpeurs en forme de sphère viennent en contact avec les parois du trou, ces palpeurs présentant chacun une surface intérieure qui s'appuie sur l'extrémité conique d'une tige de détection. Des éléments sensibles permettent de connaître la position de la tige et donc le diamètre du trou. Le dispositif peut tourner sur lui-même pour donner des mesures supplémentaires du diamètre du trou. Cette rotation ne sert pas à déterminer la forme du trou.

On connaît de EP-A-0 373 644 une jauge destinée à détecter des déplacements dans trois directions pour mesurer les dimensions d'un objet à l'aide d'un palpeur pivotant et d'un capteur photosensible solidaire du support du palpeur. Aucun moyen n'est prévu pour faire tourner le palpeur.

On connaît encore de l'abrégé de JP-A-60 252 206 un dispositif pour mesurer la circularité d'un trou à l'aide d'un palpeur déplaçable radialement pour venir en contact avec la paroi du trou. La position du contact est mesurée à l'aide d'un capteur linéaire, solidaire du support du palpeur. La mesure est fonction de la position du support. Le dispositif ne permet pas de relever la position du contact selon l'axe du trou.

La présente invention a pour but de fournir un dispositif perfectionné de contrôle de la géométrie d'un trou, permettant d'obtenir des indications précises sur la forme et le volume de ce trou.

Pour obtenir ce résultat, l'invention fournit un dispositif qui comprend :
- un support extérieur, équipé de moyens pour l'amener à le maintenir dans une position fixe par rapport au trou, et à le maintenir dans cette position,
- une pièce d'appui, montée sur le support extérieur et capable de se déplacer par rapport au support extérieur dans une première direction qui l'approche ou l'éloigne du trou, cette pièce d'appui étant équipée de moyens pour l'entraîner dans ledit déplacement et d'un capteur sensible à la position de la pièce d'appui par rapport au support extérieur,
- un ensemble de palpage, comportant un bras palpeur ayant un axe, monté de façon à pouvoir pivoter par rapport à la pièce d'appui et portant à une extrémité une touche de contact et à une autre extrémité une source capable de projeter un faisceau lumineux, l'ensemble de palpage étant monté sur la pièce d'appui et équipé de moyens pour exercer sur le bras de mesure une force transversale tendant à écarter la direction de l'axe du bras palpeur de la première direction, et de moyens pour entraîner le bras palpeur en rotation autour d'un axe de rotation parallèle à la première direction sans le déplacer selon cette première direction par rapport à la pièce d'appui,
- un capteur photo-sensible monté de façon fixe sur la pièce d'appui et comportant une surface sensible apte à recevoir l'impact du faisceau lumineux pendant la rotation du bras palpeur,
- des moyens de traitement de l'information, aptes à recevoir des signaux du capteur sensible à la position de la pièce d'appui et des signaux du capteur photo-sensible, et d'en déduire des informations relatives à la forme du trou.

La force transversale doit être suffisante pour assurer que la touche de contact vient toujours en appui sur la surface du trou, mais elle doit être suffisamment faible pour ne pas entrainer de déformations élastiques, et encore moins permanentes, de la surface du trou, ni de flexion du bras palpeur.

On conçoit que chaque position de la touche de contact par rapport à la pièce d'appui correspond à une position du point d'impact du faisceau lumineux sur la surface sensible du capteur. Supposons que le trou soit cylindrique ou conique, de révolution, et que l'ensemble de palpage lui soit coaxial, le déplacement de la touche de contact dans le trou fera décrire un cercle au point d'impact du faisceau lumineux sur la surface sensible. Si le trou est conique, le rayon de ce cercle variera lorsque la pièce d'appui se déplacera le long de l'axe de ce trou. Des moyens de calcul simples permettront de définir avec précision les caractéristiques géométriques du trou dans son ensemble.

Suivant un mode de réalisation préféré, l'ensemble de mesure comprend un corps rotatif, porté par la pièce d'appui de façon à pouvoir tourner par rapport à la pièce d'appui autour d'un axe parallèle à la première direction, et équipé de moyens pour l'entraîner en rotation, ce corps rotatif étant relié au bras de mesure par un pivot d'axe perpendiculaire au premier axe et au second axe, et portant lesdits moyens pour exercer la force transversale sur le bras de mesure.

On peut noter qu'il est possible de se dispenser de corps rotatif, en prévoyant que le bras de mesure est monté sur la pièce d'appui par l'intermédiaire d'une liaison à rotule, et les moyens pour exercer ladite force transversale et entraîner le bras de mesure en rotation sont portés par la pièce d'appui.

Une telle réalisation est plus légère mais elle est de réalisation plus délicate, attendu qu'il faut entraîner une même pièce dans deux mouvements distincts.

Divers moyens sont possibles pour créer la force transversale. On mentionnera pour mémoire la force centrifuge, s'exerçant, par exemple, sur une masselotte excentrée par rapport à l'axe du bras palpeur. Cette solution n'est généralement pas à retenir, en raison des vitesses de rotation élevées qu'elle nécessite. Avantageusement, on utilise un vérin pneumatique dont la pression peut être commandée, et qui agit en prenant appui sur le corps rotatif s'il y en a un, ou sur la pièce d'appui s'il n'y a pas de corps rotatif. Cette solution présente l'avantage de permettre d'adapter la pression aux circonstances, telles que la matière dans laquelle le trou est creusé, et d'assurer une force sensiblement constante, quel que soit le pivotement du bras palpeur par rapport à la première direction. Cela ne serait pas le cas, en particulier, si on utilisait un moyen magnétique de contrainte, ou même un ressort, dans une certaine mesure.

Pour l'introduction du bras palpeur dans le trou, il est préférable que l'angle de pivotement ait été au préalable ramené à une valeur nulle, ce qui peut se faire manuellement avec l'aide d'un moyen mécanique de maintien simple et amovible. Il est préférable de prévoir un moyen élastique disposé pour agir à l'encontre du moyen de création de la force transversale.

La pièce d'appui peut se déplacer suivant une trajectoire quelconque, par exemple selon un arc de cercle, en étant montée sur un pivot excentré de telle façon que cette trajectoire rapproche ou éloigne la pièce d'appui du trou. Les moyens de traitement de l'information devront alors être programmés pour tenir compte de la forme réelle de cette trajectoire. Cependant, la solution la plus simple consiste à prévoir que la pièce d'appui est capable de se déplacer suivant une trajectoire rectiligne, sensiblement parallèle à l'axe du trou à contrôler, en supposant que ce trou ait un axe.

Dans ce cas, le support extérieur portera des moyens de guidage rectilignes pour la pièce d'appui, par exemple une douille à billes.

Suivant une disposition avantageuse, le dispositif décrit ci-dessus est conçu pour être monté sur un effecteur sur lequel sont également montés des moyens d'accostage permettant de maintenir et serrer ensemble deux pièces à lier par rivetage, des moyens permettant de préparer un trou dans ces pièces, des moyens pour amener dans le trou un rivet à former, et des moyens pour former le rivet afin de lier les pièces, ces moyens pouvant être amenés successivement sensiblement dans l'axe du trou.

Avantageusement, le support extérieur est conçu pour venir en engagement avec les moyens d'accostage, quand ceux-ci maintiennent et serrent les pièces à lier par rivetage.

Un procédé selon l'invention pour la mise en oeuvre du dispositif qu'on vient de décrire comprend avantageusement les étapes suivantes :
- disposer la pièce d'appui dans une position rétractée par rapport au support extérieur, le bras palpeur ayant son axe maintenu sensiblement parallèle à la première direction,
- déplacer le support extérieur jusqu'à ce qu'il soit dans ladite position fixe par rapport au trou, l'axe du bras palpeur pénétrant dans le trou,
- déplacer la pièce d'appui vers une position d'extension, de façon à faire pénétrer la touche de contact dans le trou, le support extérieur étant maintenu fixe,
- faire agir la force transversale sur le bras palpeur jusqu'à ce que la touche de contact vienne en appui sur une surface intérieure du trou,
- actionner successivement par alternance, ou simultanément, les moyens pour entraîner la pièce d'appui en déplacement et le bras palpeur en rotation, la source lumineuse et le capteur photosensible étant en action,
- transmettre les signaux de position de point d'impact du faisceau lumineux et de position de la pièce d'appui aux moyens de traitement de l'information.

L'invention va être décrite de façon plus détaillée à l'aide d'un exemple pratique illustré à l'aide des dessins parmi lesquels :
Figure 1 est une coupe schématique axiale d'un dispositif conforme à l'invention.
Figure 2 est une vue partielle analogue à la figure 1, montrant une variante.

Un élément essentiel du dispositif selon l'invention est un bras palpeur 1, à une extrémité duquel est montée une touche de contact sphérique 2. Cette touche de contact est destinée à venir en contact avec la surface intérieure d'un trou à contrôler 3, foré dans une pièce 4. Le bras palpeur 1 est monté sur un pivot 5, situé dans une partie intermédiaire de sa longueur. Le bras palpeur porte, à son extrémité opposée à la touche de contact 2, une source lumineuse 6, constituée ici par une diode laser. Celle-ci émet un faisceau lumineux 7 en direction d'un capteur photosensible 8, qui comporte une surface sensible 9, dirigée vers la source 6.

Le pivot 5 est d'axe perpendiculaire à l'axe du bras palpeur 1, et il est monté sur un "corps rotatif" 10, de forme générale sensiblement cylindrique. Ce corps rotatif est pourvu de roulements 11 et 24 dont le rôle sera précisé plus loin. Le corps rotatif porte un vérin pneumatique 12, qui prend appui sur le corps rotatif d'une part et sur le bras palpeur 1 d'autre part, en un point écarté du pivot 5. Un ressort de rappel 13 agit en opposition avec le vérin 12, et il est calculé pour ramener l'axe du bras palpeur 1 parallèle à l'axe du corps rotatif 10 quand le vérin 12 cesse d'être actionné. Un moteur d'entraînement 14, relié au corps rotatif par un moyen d'entraînement 15, constitué d'un dispositif à friction, mais qui pourrait également être un dispositif à pignons, sert à faire tourner le corps rotatif 10 sur son axe. Le moteur 14 est lui-même monté sur une pièce d'appui 16, qui est montée à coulissement dans un support extérieur 17, dont l'axe est parallèle à celui du corps rotatif. La pièce d'appui 16 maintient le corps rotatif 10 à l'aide des roulements 11 constitués par deux paliers à aiguilles, qui permettent la rotation du corps rotatif sans permettre un déplacement le long de l'axe commun au corps rotatif et à la pièce d'appui. La pièce d'appui 16 porte un talon d'entraînement 18, qui traverse une lumière du support extérieur 17, et est reliée à un moyen d'entraînement 19 de la pièce d'appui. On a représenté le moyen d'entraînement 19 de façon symbolique, comme un vérin. Dans la pratique, il s'agit d'une paire de vis à billes entraînées par un moteur électrique.

On a symbolisé en 20, comme un ressort, des moyens intercalés entre le moyen d'entraînement 19 et la pièce d'appui 17, pour protéger le dispositif contre les chocs.

On a représenté de même en 21 un moyen d'entraînement du support extérieur, destiné à l'amener en appui, par un nez de guidage, contre la pièce 4, autour du trou. Dans une réalisation pratique, le dispositif est porté par un effecteur de robot, lui-même pourvu d'un nez d'accostage, c'est ce nez d'accostage de l'effecteur qui vient en contact avec la pièce, et le support extérieur vient en appui sur le nez d'accostage. La référence 22 représente, également de façon symbolique, un capteur de position de la pièce d'appui par rapport au support extérieur. Dans la pratique, il s'agit d'un capteur LVDT de la société SENSOREX de Gaillard, France.

On observera qu'il n'y a pas de capteur de la position angulaire et en rotation du bras palpeur. En effet, cette position est détectée par le capteur photosensible lui-même.

On a représenté en 23 un capteur destiné à signaler la venue en contact du support extérieur 17 avec la pièce 4. Ce capteur peut être supprimé si l'effecteur, dont on a parlé plus haut, est lui-même pourvu d'un capteur signalant la mise en contact de ses moyens d'accostage avec la pièce.

La référence 24 désigne une douille à billes disposée à l'intérieur du nez de guidage, entre celui-ci et le corps rotatif. Cette douille à billes assure le guidage du corps rotatif, et assure ainsi une bonne précision en ce qui concerne la position du dispositif, et en particulier du bras palpeur, par rapport au trou 3 à contrôler.

La référence 25 désigne un ordinateur de contrôle. Comme indiqué par des traits interrompus, cet ordinateur est relié d'une part au détecteur photosensible 8, et aux capteurs 22 et 23, pour recevoir les signaux de sortie de ces organes, et d'autre part, au moyen de commande du vérin 12, au moteur d'entraînement 14, et au moyens d'entraînement 19 et 21 de la pièce d'appui et du support extérieur.

Pour des raisons de simplicité, on n'a pas représenté les moyens d'alimentation en énergie du vérin 12 et de la source lumineuse 6. Cette alimentation en énergie peut être réalisée, pour l'air comprimé, par des joints tournants classiques, et, pour l'alimentation électrique, par des contacts tournants. On observera qu'il serait possible également d'avoir des accumulateurs de pression ou d'énergie électrique chargeable ou rechargeable. On pourrait aussi remplacer la source lumineuse 6 par un miroir solidaire du bras palpeur 1. Dans ce cas, le rayon lumineux serait simplement réfléchi par le miroir pour être envoyé vers le capteur photosensible. Dans ce cas, les angles faits par le rayon lumineux tombant sur le capteur photosensible seraient le double des angles faits par le bras palpeur 1 avec l'axe du corps tournant.

L'ensemble du dispositif peut être placé sur un effecteur pourvu de moyens pour amener successivement dans l'axe du trou un dispositif de perçage, des moyens de pose d'un rivet et des moyens de formage du rivet, ainsi qu'il est décrit dans le document EP-A-0.402.222 cité plus haut, de façon à assurer de façon automatique des rivetages de haute qualité.

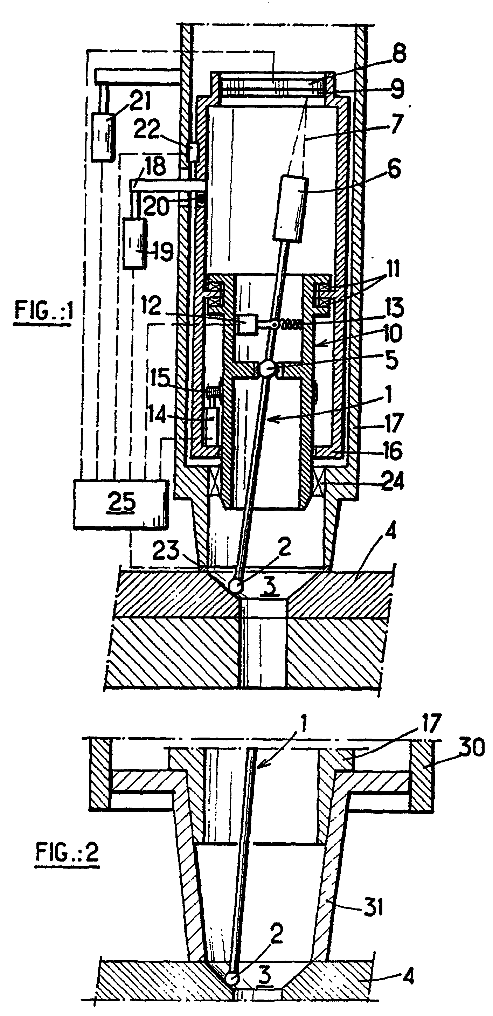

La figure 2 montre une partie d'un tel effecteur 30, pourvu d'un nez d'accostage coulissant 31, qui vient en appui sur la pièce 4, autour du trou 3. L'extrémité du support extérieur 17 s'appuie alors sur la pièce 4 par l'intermédiaire du nez d'accostage 3.

## Revendications

1. Dispositif de contrôle de la géométrie d'un trou (3) creusé dans une pièce (4), **caractérisé en ce qu'**il comprend:
- un support extérieur (17), équipé de moyens pour l'amener à le maintenir dans une position fixe par rapport au trou, et à le maintenir dans cette position,
- une pièce d'appui (16), montée sur le support extérieur et capable de se déplacer par rapport au support extérieur dans une première direction qui l'approche ou l'éloigne du trou, cette pièce d'appui étant équipée de moyens pour l'entraîner dans ledit déplacement et d'un capteur (22) sensible à la position de la pièce d'appui par rapport au support extérieur,
- un ensemble de palpage, comportant un bras palpeur (1) ayant un axe, monté de façon à pouvoir pivoter par rapport à la pièce d'appui et portant à une extrémité une touche de contact (2) et à une autre extrémité une source (6) capable de projeter un faisceau lumineux (7), l'ensemble de palpage étant monté sur la pièce d'appui et équipé de moyens (12, 13) pour exercer sur le bras de mesure une force transversale tendant à écarter la direction de l'axe du bras palpeur de la première direction, et de moyens (14, 15) pour entraîner le bras palpeur en rotation autour d'un axe de rotation parallèle à la première direction sans le déplacer selon cette première direction par rapport à la pièce d'appui,
- un capteur photo-sensible (8) monté de façon fixe sur la pièce d'appui et comportant une surface sensible (9) apte à recevoir l'impact du faisceau lumineux (7) pendant la rotation du bras palpeur,
- des moyens de traitement de l'information (25), aptes à recevoir des signaux du capteur (22) sensible à la position de la pièce d'appui et des signaux du capteur photo-sensible (8), et d'en déduire des informations relatives à la forme du trou.

2. Dispositif selon la revendication 1, **caractérisé en ce que** l'ensemble de mesure comprend un corps rotatif (10), porté par la pièce d'appui (16) de façon à pouvoir tourner par rapport à la pièce d'appui autour d'un axe parallèle à la première direction, et équipé de moyens (14, 15) pour l'entraîner en rotation, ce corps rotatif étant relié au bras de mesure (1) par un pivot (5) d'axe perpendiculaire au premier axe et au second axe, et portant lesdits moyens (12, 13) pour exercer la force transversale sur le bras de mesure.

3. Dispositif selon la revendication 1 ou 2, **caractérisé en ce que** le bras palpeur (1) est monté sur la pièce d'appui par l'intermédiaire d'une liaison à rotule, et les moyens pour exercer ladite force transversale et entraîner le bras palpeur en rotation sont portés par la pièce d'appui.

4. Dispositif selon l'une des revendications 1 à 3, **caractérisé en ce que** les moyens pour exercer la force transversale comprennent un vérin pneumatique (12) dont la pression peut être commandée, ce vérin pneumatique prenant appui sur le corps rotatif (10) s'il y en a un, et sur la pièce d'appui (16) s'il n'y a pas de corps rotatif.

5. Dispositif selon la revendication 2, **caractérisé en ce que** le support extérieur (17) porte des moyens de guidage, tels qu'une douille à billes (24), pour le corps tournant, afin de mieux stabiliser la position du pivot (5) par rapport au trou (3).

6. Dispositif selon l'une des revendications 1 à 5, **caractérisé en ce qu'**il est conçu pour être monté sur un effecteur (30) sur lequel sont également montés des moyens d'accostage (31) permettant de maintenir et serrer ensemble deux pièces à lier par rivetage, des moyens permettant de préparer un trou dans ces pièces, des moyens pour amener un rivet dans le trou, et des moyens pour former le rivet afin de lier les pièces, ces moyens pouvant être amenés successivement sensiblement dans l'axe du trou.

7. Dispositif selon la revendication 6, **caractérisé en ce que** le support extérieur (17) est conçu pour venir en engagement avec les moyens d'accostage de l'effecteur quand ceux-ci maintiennent et serrent les pièces à lier.

8. Procédé de contrôle de la géométrie d'un trou (3), utilisant le dispositif selon l'une des revendications 1 à 7, **caractérisé en ce qu'**il comporte les étapes suivantes :
- disposer la pièce d'appui (16) dans une position rétractée par rapport au support extérieur (17), le bras palpeur (1) ayant son axe maintenu sensiblement parallèle à la première direction,
- déplacer le support extérieur (17) jusqu'à ce qu'il soit dans ladite position fixe par rapport au trou (3), l'axe du bras palpeur (1) pénétrant dans le trou (3),
- déplacer la pièce d'appui (16) vers une position d'extension, de façon à faire pénétrer la touche de contact (2) dans le trou (3), le support extérieur (17) étant maintenu fixe,
- faire agir la force transversale sur le bras palpeur (1) jusqu'à ce que la touche de contact (2) vienne en appui sur une surface intérieure du trou (3),
- actionner successivement par alternance, ou simultanément, les moyens pour entraîner la pièce d'appui (16) en déplacement et le bras palpeur (1) en rotation, la source lumineuse (6) et le capteur photosensible (8) étant en action,
- transmettre les signaux de position de point d'impact du faisceau lumineux et de position de la pièce d'appui (16) aux moyens de traitement de l'information (25).

## Patentansprüche

1. Vorrichtung zum Kontrollieren der Geometrie eines in ein Bauteil (4) eingearbeiteten Loches (3), **dadurch gekennzeichnet, dass** sie aufweist:
- eine äußere Abstützung (17), die mit Mitteln ausgerüstet ist, um sie in eine feste Position bezüglich des Loches zu bringen und sie in dieser Position zu halten,
- ein Anschlagteil (16), das auf der äußeren Abstützung angebracht und bezüglich der äußeren Abstützung in eine erste Richtung auf das Loch zu oder von dem Loch weg verschiebbar ist, wobei dieses Anschlagteil mit Mitteln zum Bewirken dieser Verschiebung und mit einem Aufnehmer (22) ausgerüstet ist, der auf die Position des Anschlagteils bezüglich der äußeren Abstützung anspricht;
- eine Tastanordnung, die einen Tastarm (1) mit einer Achse aufweist, der so angebracht ist, dass er bezüglich des Anschlagteiles schwenkbar ist und an einem Ende ein Kontaktelement (2) und an einem anderen Ende eine Quelle (6) zum Erzeugen eines Lichtbündels (7) trägt, wobei die Tastanordnung auf dem Anschlagteil angebracht und ausgerüstet ist mit Mitteln (12, 13), um auf den Tastarm eine Querkraft auszuüben, die die Richtung der Achse des Tastarms von der ersten Richtung weg zu bewegen sucht, und mit Mitteln (14, 15), um den Tastarm in Drehung um eine Drehachse zu versetzen, die parallel zu der ersten Richtung ist, ohne ihn in dieser ersten Richtung bezüglich des Anschlagteils zu verschieben,
- einen photosensiblen Aufnehmer (8), der auf dem Anschlagteil festgelegt ist und eine Sensorfläche (9) aufweist, auf die das Lichtbündel (7) während der Drehung des Tastarmes auftreffen kann;
- Mittel zum Verarbeiten der Information (25), die Signale des Aufnehmers (22) in Abhängigkeit von der Position des Anschlagteils und Signale des photosensiblen Aufnehmers (8) empfangen und von diesen Informationen bezüglich der Form des Loches ableiten können.

2. Vorrichtung nach Anspruch 1, **dadurch gekennzeichnet, dass** die Messanordnung einen Drehkörper (10) aufweist, der von dem Anschlagteil (16) so getragen wird, dass er bezüglich des Anschlagteils um eine zu der ersten Richtung parallele Achse drehbar ist, und der mit Mitteln (14, 15) ausgerüstet ist, um ihn in Drehung zu versetzen, wobei der Drehkörper mit dem Messarm (1) durch ein Schwenklager (5) verbunden ist, dessen Achse senkrecht zu der ersten Achse und der zweiten Achse verläuft, sowie die besagten Mittel (12, 13) zum Ausüben der Querkraft auf den Messarm trägt.

3. Vorrichtung nach Anspruch 1 oder 2, **dadurch gekennzeichnet, dass** der Tastarm (1) an dem Anschlagteil über eine Drehverbindung angebracht ist und die Mittel zum Ausüben der Querkraft und zum Versetzen des Tastarms in Drehung von dem Anschlagteil getragen werden.

4. Vorrichtung nach einem der Ansprüche 1 bis 3, **dadurch gekennzeichnet, dass** die Mittel zum Ausüben der Querkraft einen pneumatischen Stellmotor (12) aufweisen, dessen Druck steuerbar ist, wobei dieser pneumatische Stellmotor an dem Drehkörper (10), falls vorhanden, und an dem Anschlagteil (16), falls kein Drehkörper vorhanden ist, angreift.

5. Vorrichtung nach Anspruch 2, **dadurch gekennzeichnet, dass** die äußere Abstützung (17) Führungsmittel wie eine Kugelhülse (24) für den Drehkörper trägt, um die Position des Schwenklagers (5) bezüglich des Loches (3) besser zu stabilisieren.

6. Vorrichtung nach einem der Ansprüche 1 bis 5, **dadurch gekennzeichnet, dass** sie so ausgebildet ist, dass sie an einem Effektor (30) anbringbar ist, an dem ferner angebracht sind: Kopplungsmittel (31), die es erlauben, zwei durch Nieten zu verbindende Bauteile zu halten und zusammen zu drücken, Mittel, die es erlauben, ein Loch in diesen Bauteilen herzustellen, Mittel zum Zuführen eines Niet in das Loch und Mittel zum Verformen des Niet, um die Bauteile zu verbinden, wobei diese Mittel im wesentlichen nacheinander in die Achse des Loches einbringbar sind.

7. Vorrichtung nach Anspruch 6, **dadurch gekennzeichnet, dass** die äußere Abstützung (17) so ausgebildet ist, dass sie mit den Kopplungsmitteln des Effektors in Eingriff gelangt, wenn diese die zu verbindenden Bauteile halten und einspannen.

8. Verfahren zum Kontrollieren der Geometrie eines Loches (3) unter Verwendung der Vorrichtung nach einem der Ansprüche 1 bis 7, **dadurch gekennzeichnet, dass** es die folgenden Schritte aufweist:
- Anordnen des Anschlagteils (16) in einer zurückgezogenen Position bezüglich der äußeren Abstützung (17), wobei der Tastarm (1) mit seiner Achse im wesentlichen parallel zu der ersten Richtung gehalten wird,
- Verschieben der äußeren Abstützung (17), bis sie in der festen Position bezüglich des Loches (3) ist, wobei die Achse des Tastarmes (1) in das Loch (3) eindringt,
- Verschieben des Anschlagteils (16) in eine ausgefahrene Position, um das Kontaktelement (2) in das Loch (3) eindringen zu lassen, wobei die äußere Abstützung (17) festgehalten wird,
- Ausüben der Querkraft auf den Tastarm (1), bis das Kontaktelement (2) an der Innenfläche des Loches (3) anliegt,
- aufeinanderfolgendes oder gleichzeitiges Betätigen der Mittel zum Verschieben des Anschlagteils (16) und zum Drehen des Tastarmes (1), wobei die Lichtquelle (6) und der photosensible Aufnehmer (8) aktiviert sind,
- Übertragen der Signale der Position des Auftreffpunktes des Lichtstrahles und der Position des Anschlagteils (16) auf die Mittel zum Verarbeiten der Information (25).

## Claims

1. A device for checking the geometry of a hole (3) bored in a part (4) **characterised in that** it comprises:
- an external support (17) equipped with means for moving it into and holding it in a fixed position relative to the hole and holding it in this position,
- a bearing piece (16) mounted on the external support and capable of moving relative to the external support in a first direction that moves it towards or away from the hole, the bearing piece being equipped with means for driving said movement and a sensor (22) responsive to the position of the bearing piece relative to the external support,
- a sensing system including a sensor arm (1) having an axis, mounted to be able to pivot relative to the bearing piece and carrying a contact member (2) at one end and a source (6) at the other end capable of projecting a light beam (7), the sensing system being mounted on the bearing piece and equipped with means (12, 13) for exerting on the measuring arm a transverse force tending to move the direction of the axis of the sensor arm away from the first direction and means (14, 15) for rotating the sensor arm about a rotation axis parallel to the first direction without moving it in the first direction relative to the bearing piece,
- a photo-sensitive sensor (8) fixedly mounted on the bearing piece and having a sensitive surface (9) adapted to have the light beam (7) impinge on it during rotation of the sensor arm, and
- data processing means (25) adapted to receive signals from the sensor (22) responsive to the position of the bearing piece and signals from the photo-sensitive sensor (8) and to deduce therefrom information relating to the shape of the hole.

2. A device according to claim 1, **characterised in that** the measuring system includes a rotary body (10) which is carried by the bearing piece (16) in such a manner that it can turn relative to the bearing piece about an axis parallel to the first direction and is equipped with means (14, 15) for rotating it, the rotary body being coupled to the measuring arm (1) by a pivot (5) the axis of which is perpendicular to the first axis and to the second axis and carrying said means (12, 13) for exerting the transverse force on the measuring arm.

3. A device according to claim 1 or claim 2, **characterised in that** the sensor arm (1) is mounted on the bearing piece by means of a ball joint and the means for exerting said transverse force and rotating the sensor arm are carried by the bearing piece.

4. A device according to any one of claims 1 to 3, **characterised in that** the means for exerting the transverse force include an air cylinder (12) the pressure in which can be controlled, the air cylinder bearing on the rotary body (10), if there is one, or on the bearing piece (16) if there is no rotary body.

5. A device according to claim 2, **characterised in that** the external support (17) carries guide means such as a ball bush (24) for the rotary body to stabilise better the position of the pivot (5) relative to the hole (3).

6. A device according to any one of claims 1 to 5, **characterised in that** it is designed to be mounted on an effector (30) on which are also mounted locating means (31) for holding and clamping together two parts to be riveted together, means for preparing a hole in the parts, means for placing a rivet in the hole and means for shaping the rivet to join the parts, these means being adapted to be moved substantially onto the axis of the hole in succession.

7. A device according to claim 6, **characterised in that** the external support (17) is designed to engage with the locating means of the effector when the latter are holding and clamping the parts to be joined.

8. A method of checking the geometry of a hole (3) using a device according to any one of claims 1 to 7, **characterised in that** it includes the following steps:
- placing the bearing piece (16) in a retracted position relative to the external support (17), the sensor arm (1) having its axis held substantially parallel to the first direction,
- moving the external support (17) until it is in said fixed position relative to the hole (3), the axis of the sensor arm (1) penetrating into the hole (3),
- moving the bearing piece (16) towards an extended position so as to cause the contact member (2) to penetrate into the hole (3), the external support (17) being held fixed,
- applying the transverse force to the sensor arm (1) until the contact member (2) bears on an inside surface of the hole (3),
- actuating the means for driving the movement of the bearing piece (16) and the rotation of the sensor arm (1) successively and alternately or simultaneously, the light source (6) and the photo-sensitive sensor (8) being operative,
- transmitting signals representative of the position of the point of impact of the light beam and the position of the bearing piece (16) to the data processing means (25).
